# EUROPEAN PATENT SPECIFICATION

(11) **EP 3 921 110 B1**
(45) Date of publication and mention of the grant of the patent: **21.05.2025**
(21) Application number: 20714306.6
(22) Date of filing: 07.02.2020
(51) Int. Cl.: B23K 26/14, B23K 26/38

(54) **METHODS OF LASER CUTTING**
VERFAHREN ZUM LASERSCHNEIDEN
PROCÉDÉS DE DÉCOUPE AU LASER

(30) Priority: 08.02.2019 SE 1950144
(43) Date of publication of application: 15.12.2021
(73) Proprietor: Väderstad Holding AB, 590 21 Väderstad (SE)
(72) Inventor: STARK, Andreas, 590 21 Väderstad (SE)
(74) Representative: AWA Sweden AB
(86) International application number: PCT/SE2020/050119
(87) International publication number: WO 2020/162823

(56) References cited:
- JP-A- S59 163 093
- JP-A- S61 135 496
- US-A- 5 756 962
- US-A- 5 818 009

## Description

### Technical Field

This document discloses a method for laser cutting.

The methods disclosed in the document are used in particular but not exclusively in laser cutting of substances of metal, such as steel, and in particular for laser cutting of substances in the form of plates, tubes or bars.

### Background

It is known that in laser cutting, cutting gas is used to flush out, by means of a nozzle concentric with the laser beam, the molten or vaporized material from the hole, recess or cut formed by the laser beam.

Depending on the type of material and the desired cutting speed, the cutting gas may for example consist of oxygen, nitrogen, helium, argon, carbon dioxide or combinations thereof. The cutting gas may thus be inert or reactive.

For many applications, inert gases such as nitrogen or helium are desirable since they reduce the effect, such as oxidation, on the material being cut. To achieve high cutting speeds, a cutting gas which reacts exothermically, such as oxygen gas, is selected. In such an exothermic reaction, to a great extent oxide coatings may occur on and around the cut surfaces. Such oxide coatings can have a negative effect on subsequent surface treatment or joining. It is therefore desirable to use inert cutting gas.

The nozzle comprises a channel which extends between an inlet and an outlet and may taper in the direction towards the outlet. The laser beam may be focused through the channel and outlet, and cutting gas may be conducted under high pressure through the channel and outlet.

It is known that a higher laser power allows cutting of thicker material. It is also known to increase the pressure of the cutting gas when cutting thicker material.

CN103056522A discloses an approach for improving the cutting speed by bringing the cutting gas to form an eddy. The rotational movement of the eddy is created by means of a set of radially short, oblique wings on the inwardly facing conical surface of the nozzle. Document US5756962 discloses a method in accordance with the preamble of claim 1.

There remains however a further desire to enable cutting of thicker material and/or to enable higher cutting speeds, while retaining the quality of the recess, hole or cut produced, for a specific laser power.

### Summary

One object is to create a laser nozzle which allows a higher cutting speed and/or cutting of thicker material for a specific laser power.

The invention is defined by the attached independent claim 1. Embodiments arise from the dependent claims, the description which follows and the attached drawings.

A method is created for producing a laser nozzle for gas-assisted cutting by means of a laser beam. The produced laser nozzle comprises an inlet, an outlet, and a channel extending between the inlet and outlet for the laser beam and cutting gas, which channel has a central axis. The channel has a first portion with an inwardly facing surface. According to the method, the outlet is formed such that, before the nozzle is first used, the outlet has no opening or has an opening diameter which is smaller than a diameter of the laser beam, and that the laser beam is allowed to cut away an edge portion of the outlet to form the opening.

### Brief Description of the Drawings

Fig. 1 diagrammatically shows a laser cutting device.
Figs. 2a-2d show a first variant of a laser nozzle.
Figs. 3a-3d show a second variant of a laser nozzle.
Figs. 4a-4d show a third variant of a laser nozzle.

### Detailed Description

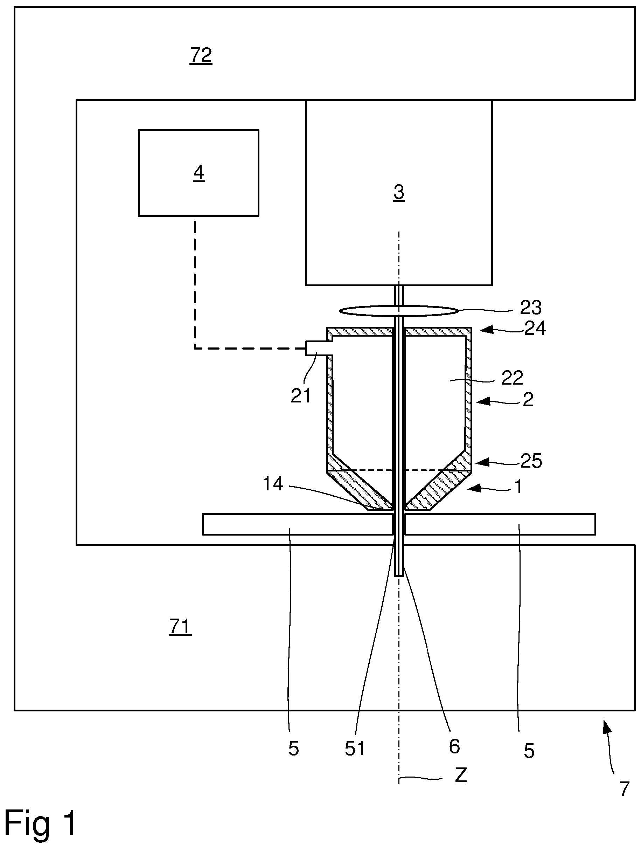

Figure 1 shows a laser cutting device 7 which comprises a holder 71 for a workpiece and a cutting head holder 72.

The holder 7 is arranged to carry a workpiece such as a plate, a bar, a tube or another part, which may be made of metal, preferably steel or aluminium.

The cutting head may comprise a laser source 3 and a laser cutting head 2. The cutting head may also comprise a focusing device 23. A cutting gas source 4 is connected to the laser cutting head 2.

The laser beam emitted by the laser head may, but need not, be focused by means of the focusing device 23, which may be integrated with the laser source or the laser head or be formed as a part arranged between the laser source 3 and laser head 2.

The laser beam extends along a beam axis which may coincide with a central axis Z of the laser head.

The laser head 2 contains a chamber 22 which has a connection 21 for cutting gas, to which the cutting gas source 4 is connected.

The laser head has an inlet 24 for the laser beam and an outlet 25 for the laser beam.

A laser nozzle 1 is arranged at the outlet 25. The laser nozzle 1 is formed as a body 11 with an inlet 12, an outlet 13 and a channel 14 extending in between. The laser nozzle 1 may be mounted on the laser head outlet 25, for example by means of a screw joint or bayonet fitting. In the example shown, the laser nozzle has a threaded portion 15 at its inlet 12 which engages in a corresponding threaded portion on the outlet of the laser head 2.

The body 11 may be formed as a substantially cylindrical or conical part with a length amounting to around 1-5 cm, preferably 1-3 cm. In the example shown, the body has a substantially vertical conical form, the bottom surface periphery of which has been modified to make it easier to grip when the nozzle 1 is screwed in and out of engagement with the laser head 2.

The channel 14 may have an inward surface 112 which is approximately cylindrical or approximately conical.

An approximately helical or spiral blade 16 extends along at least a portion 141 of the channel 14. The blade extends over at least 300 degrees around the central axis Z. For example, the blade may extend over at least 360 degrees (i.e. one turn) along the surface, preferably at least 500 degrees, at least 540 degrees, at least 700 degrees, at least 720 degrees (i.e. two turns), at least 900 degrees, at least 1000 degrees or at least 1080 degrees (i.e. three turns).

At the central axis Z, a beam path is shown, the diameter of which corresponds approximately to a maximum diameter of a laser beam for which the nozzle is suitable.

It is clear that the diameter of the beam path may be fixed or diminishing, where it may rather be suitable to use a focused laser beam.

The beam path is defined by a radially inner edge of the blade.

The laser beam has the approximate form of a cylinder or cone with a radius RL from the central axis Z. In the case where the laser beam has a conical form, the radius RL varies along the central axis Z and may be expressed as RL(Z).

The wall has a radius RA which, in the case of a conical wall, varies along the central axis Z and may be expressed as RA(Z).

In the case that both the wall and the laser beam are cylindrical, the radial extent of the blade may be expressed as RA-RL.

In the case that both the wall and the laser beam are conical, the radial extent of the blade may be expressed as RA(Z)-RL(Z).

In the case that the wall is cylindrical and the laser beam conical, the radial extent of the blade may be expressed as RA-RL(Z).

In the case that the wall is conical and the laser beam cylindrical, the radial extent of the blade may be expressed as RA(Z)-RL.

The blade 16 thus extends radially inwardly from the wall towards the beam path at a distance which is at least 70% of the difference RA-RL, preferably at least 80%, at least 90%, at least 95% or at least 99%.

The outlet 13 from the laser nozzle 1 may be adapted to a greatest nominal beam diameter at the outlet.

A second portion 142 may be present at the outlet downstream of the first portion 141. This second portion may have an inward conical surface which is formed such that a cone angle of said second inward conical surface 142 is greater than a cone angle of said first portion 141.

According to one embodiment, the outlet may have a size, typically the diameter, which is sufficiently large for the laser beam to be able to extend out through the outlet without influencing this or being influenced thereby.

According to the embodiment shown in the figures however, the outlet 13 has a diameter which is smaller than a nominal beam diameter at the outlet. This means that, when the laser beam is activated for the first time after assembly, the outlet is cut away by the laser beam so that the outlet has a diameter which is precisely adapted to the laser beam.

Preferably, the initial diameter of the outlet may be 30-95% of a nominal maximum beam diameter, preferably 50-90%, or 60-80%.

According to one embodiment, the laser nozzle - including blade - may be made from one material piece, or from two or more material pieces which are permanently joined together. For example, two material pieces may be joined along a plane which contains the central axis Z.

According to another embodiment, which is shown in the figures, the laser nozzle 1 may have an inset 17 in which flanges are formed. The inset may be fixedly or separably arranged in the laser nozzle 1.

The inset 17 may have a radially outward form which is approximately cylindrical or approximately conical, and an inward form which is correspondingly approximately cylindrical or approximately conical, with the blade as described above.

The inset may be received in a recess in the nozzle 1, the shape of which may correspond to the outer form of the inset 17.

The inset 17 may extend all the way to the outlet 12 so that the edge 111 which is cut away forms part of the inset. Alternatively, the outlet 111 may be formed by the nozzle so that the part 111 which is cut away forms part of the nozzle 1.

It is clear that the laser nozzle 1 or inset 17 may be provided with one, two or more blades, which may form one, two or more helical parallel channels through the nozzle.

According to one embodiment, n blades (wherein 2 ≤ n ≤ 4) each with an extension of up to 360/n ± 20 degrees may be placed such that together they extend all the way along the inwardly facing surface.

When the nozzle 1 is used, it is mounted in the known fashion, wherein the cutting gas and laser beam are attached. Due to the shape of the blade, an improved eddying of cutting gas occurs which extends downward into the recess, hole or cut formed by the laser beam, and thereby allows more effective removal of vaporized material.

By forming the opening 13 with a diameter which is smaller than the nominal beam diameter, it is ensured that the diameter 13 of the opening matches the recess, hole or cut formed by the laser beam, and hence the quantity of cutting gas which does not penetrate therein is minimized.

Alternatively, the nozzle 1 or inset 17 may be produced without an opening or with a very small opening, wherein the laser is allowed to create the opening when it is first started after mounting of the nozzle/inset on the laser head. On such start-up, it may be desirable to start the laser with a lower power than for normal cutting, and/or to apply the cutting gas with a lower pressure than usual, and then to increase the laser power and/or cutting gas pressure when the opening is formed.

Furthermore, the outlet of the nozzle or inset may be formed with thinner material in the region where the opening is expected to be formed.

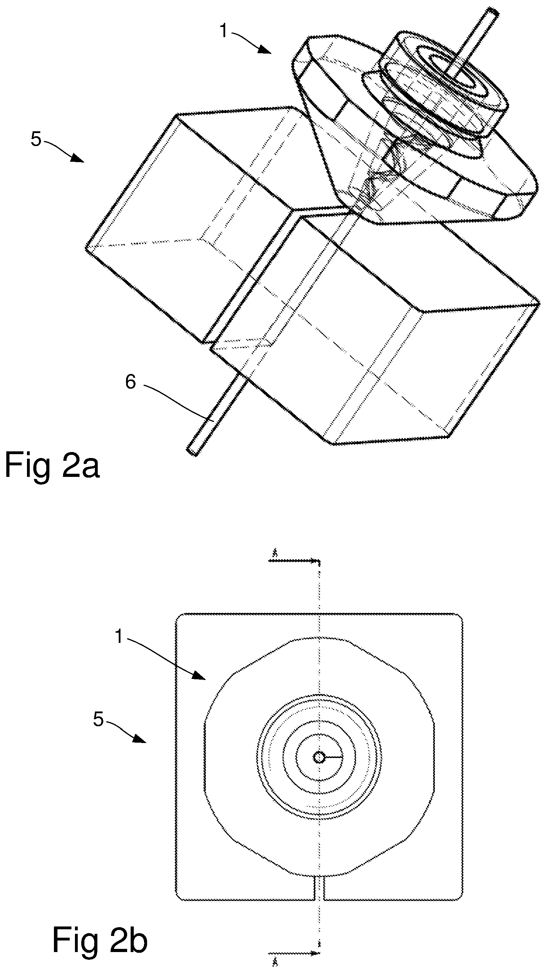

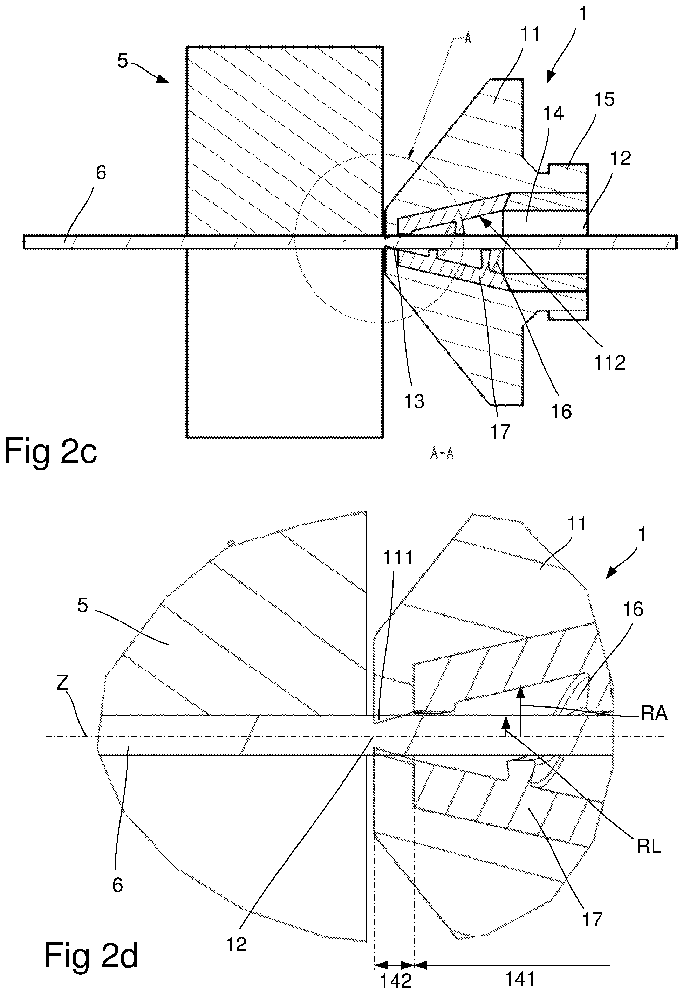

Figures 2a-2d show an embodiment of a laser nozzle 1 in which the blade 16 extends approximately over 1.75 turns, i.e. around 630 degrees, around the central axis Z.

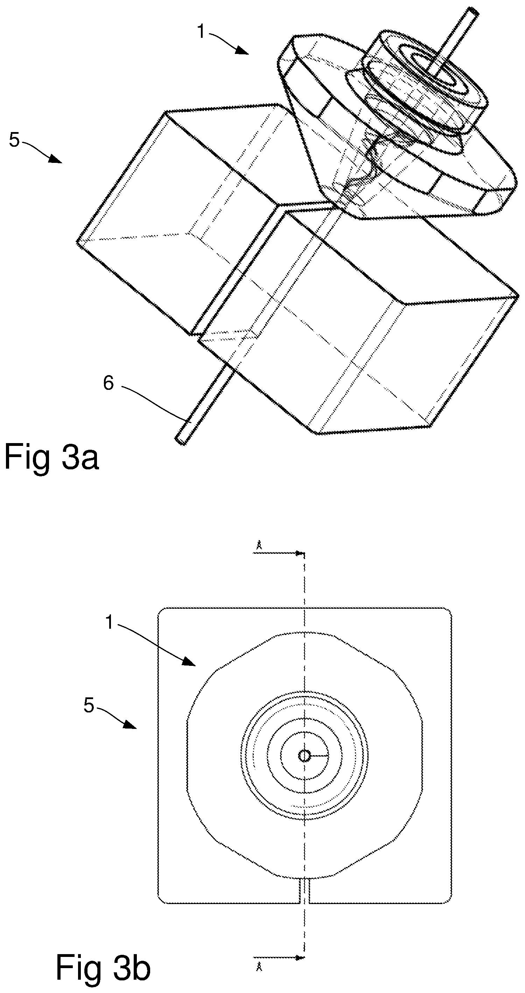

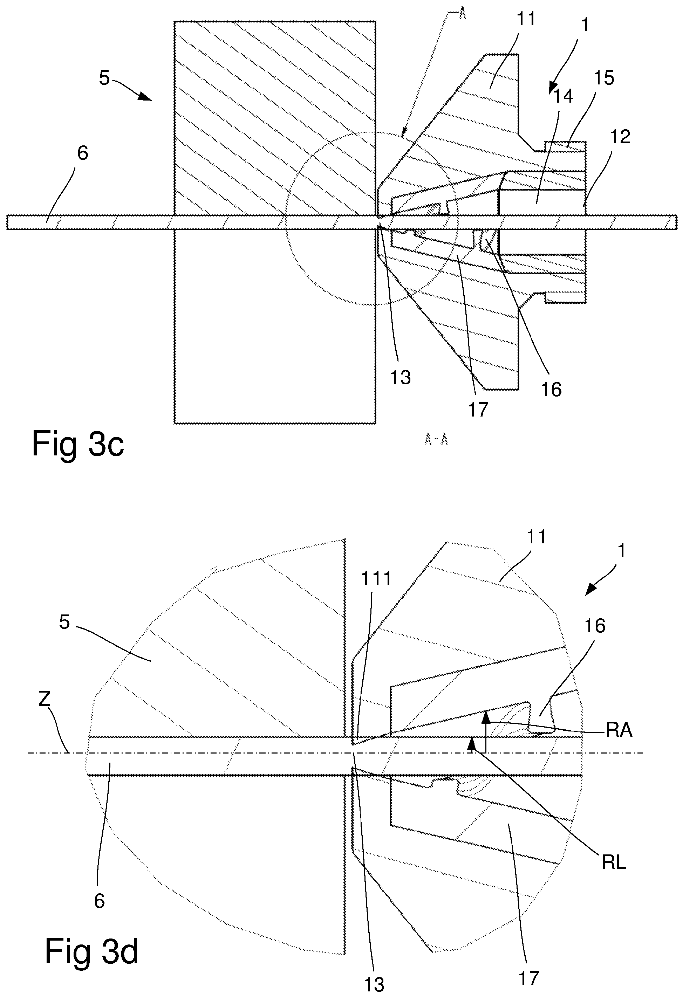

Figures 3a-3d show an embodiment of a laser nozzle 1 in which the blade 16 extends approximately over 1.5 turns, i.e. around 540 degrees, around the central axis Z.

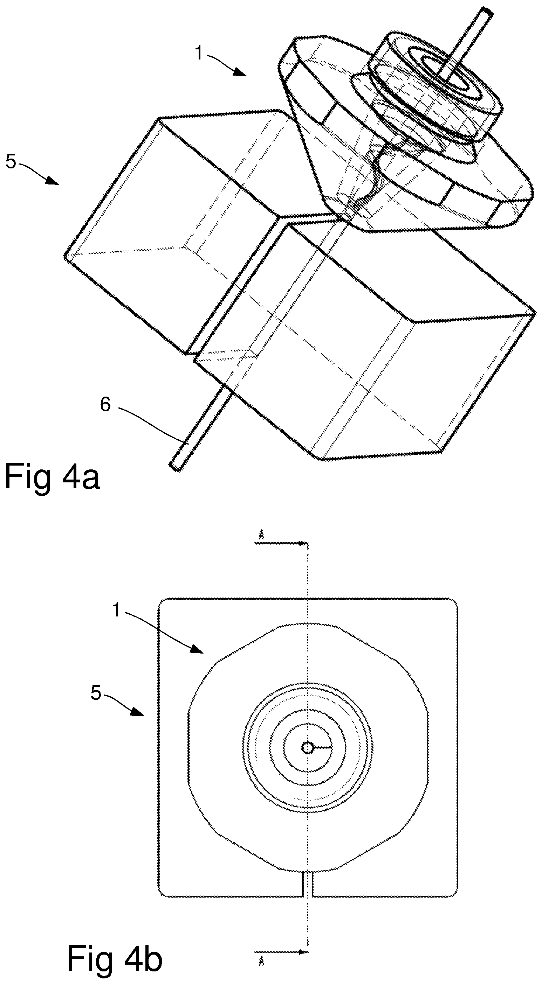

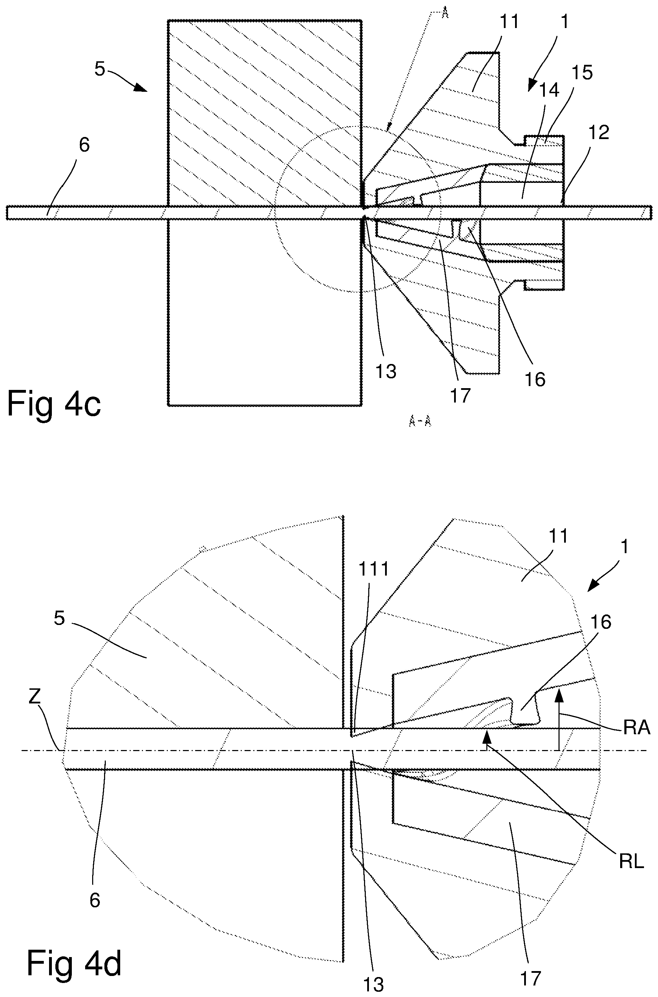

Figures 4a-4d show an embodiment of a laser nozzle 1 in which the blade 16 extends approximately over 1.25 turns, i.e. around 450 degrees, around the central axis Z.

Since the blade 16 extends over the same axial length along the central axis Z, the blade 16 has a different pitch in the different embodiments.

An inner wall may be arranged on the radially inner part of the blade, which extends axially along part of the nozzle and divides the part of the channel in which the blade is situated from the part of the channel in which the laser beam runs. The inner wall may have a substantially conical or cylindrical form.

A laser nozzle 1 or inset 17 as described above may be formed in a number of different ways. A first such way may be by 3D printing (additive manufacturing). Another such way may be to form the blade 16 itself and the conical or cylindrical body as separate parts which are fixed to each other. A further such way is by casting with a core which is removed after the material has been introduced. Yet another such way is to produce a nozzle or inset in two parts which are joined together along a plane containing the central axis Z.

## Claims

1. Method for gas-assisted laser cutting, comprising:
supplying a laser beam (6) and a cutting gas through a laser nozzle (1) comprising:
an inlet (12),
an outlet (13), and
a channel (14) extending between the inlet (12) and outlet (13) for the laser beam and cutting gas, which channel has a central axis (Z),
wherein the channel (14) has a first portion (141) with an inwardly facing surface (112),
**characterised in that**
before the start of said laser cutting, the outlet (13) has no opening or has an opening diameter which is smaller than the diameter of the laser beam (6), and wherein the laser beam (6) is allowed to cut away an edge portion (111) of the outlet (13) so that the outlet has a diameter corresponding to said diameter of the laser beam (6).

2. The method according to claim 1, further comprising forming an eddy by means of a substantially helical blade (16) which extends radially inwardly from the inwardly facing surface (112) and extends over at least 120 degrees around the central axis (Z) and along the inwardly facing surface.

3. The method according to any of the preceding claims, wherein the inwardly facing surface (112) has a cross-sectional area which diminishes along the central axis (Z) in the direction towards the outlet (13).

4. The method according to any of the preceding claims, wherein the inwardly facing surface (112) has a cross-sectional area which is constant along the central axis (Z).

5. The method according to any of the preceding claims, wherein the channel (14) has a second portion (142) which has an inward conical surface and is situated downstream of said first portion, wherein a cone angle of said second inward conical surface is greater than a cone angle of said first portion.

6. The method according to any of the preceding claims, wherein said inlet (12), outlet (13), channel (14) and blade (16) are integral with the nozzle (1).

7. The method according to any of the preceding claims, furthermore comprising an inner wall which divides a part of the channel in which the blade is active from a part of the channel in which the laser beam runs.

## Patentansprüche

1. Verfahren zum gasunterstützten Laserschneiden, das Folgendes umfasst:
Zuführen eines Laserstrahls (6) und eines Schneidgases durch eine Laserdüse (1), die Folgendes umfasst:
einen Einlass (12),
einen Auslass (13) und
einen Kanal (14), der sich zwischen dem Einlass (12) und dem Auslass (13) erstreckt, für den Laserstrahl und das Schneidgas, wobei der Kanal eine Mittelachse (Z) aufweist,
wobei der Kanal (14) einen ersten Abschnitt (141) mit einer nach innen zeigenden Oberfläche (112) aufweist,
**dadurch gekennzeichnet, dass**,
vor dem Start des Laserschneidens, der Auslass (13) keine Öffnung aufweist oder einen Öffnungsdurchmesser aufweist, der kleiner ist als der Durchmesser des Laserstrahls (6), und wobei ermöglicht wird,
dass der Laserstrahl (6) einen Kantenabschnitt (111) des Auslasses (13) wegschneidet, so dass der Auslass einen Durchmesser aufweist, der dem Durchmesser des Laserstrahls (6) entspricht.

2. Verfahren nach Anspruch 1, das ferner das Bilden eines Wirbels mit Hilfe eines im Wesentlichen schraubenförmigen Schaufelblatts (16) umfasst, das sich in Radialrichtung von der nach innen zeigenden Oberfläche (112) aus nach innen erstreckt und sich über mindestens 120 Grad um die Mittelachse (Z) und entlang der nach innen zeigenden Oberfläche erstreckt.

3. Verfahren nach einem der vorhergehenden Ansprüche, wobei die nach innen zeigende Oberfläche (112) eine Querschnittsfläche aufweist, die sich entlang der Mittelachse (Z) in der Richtung, hin zu dem Auslass (13), vermindert.

4. Verfahren nach einem der vorhergehenden Ansprüche, wobei die nach innen zeigende Oberfläche (112) eine Querschnittsfläche aufweist, die entlang der Mittelachse (Z) konstant ist.

5. Verfahren nach einem der vorhergehenden Ansprüche, wobei der Kanal (14) einen zweiten Abschnitt (142) aufweist, der eine innere kegelförmige Oberfläche aufweist und stromabwärts von dem ersten Abschnitt angeordnet ist, wobei ein Kegelwinkel der zweiten inneren kegelförmigen Oberfläche größer ist als ein Kegelwinkel des ersten Abschnitts.

6. Verfahren nach einem der vorhergehenden Ansprüche, wobei der Einlass (12), der Auslass (13), der Kanal (14) und das Schaufelblatt (16) integral mit der Düse (1) sind.

7. Verfahren nach einem der vorhergehenden Ansprüche, das darüber hinaus eine Innenwand umfasst, die einen Teil des Kanals, in dem das Schaufelblatt aktiv ist, von einem Teil des Kanals, in dem Laserstrahl verläuft, abteilt.

## Revendications

1. Procédé de découpe au laser assistée par gaz, comprenant :
l'alimentation d'un faisceau laser (6) et d'un gaz de découpe par une buse laser (1), comprenant :
une entrée (12),
une sortie (13) et
un canal (14) s'étendant entre l'entrée (12) et la sortie (13) pour le faisceau laser et le gaz de découpe, lequel canal possède un axe central (Z),
dans lequel le canal (14) possède une première partie (141) avec une surface tournée vers l'intérieur (112),
**caractérisé en ce que**
avant le début de ladite découpe au laser, la sortie (13) est dépourvue d'ouverture ou possède un diamètre d'ouverture qui est inférieur au diamètre du faisceau laser (6), et dans lequel le faisceau laser (6) est autorisé à découper une partie de bord (111) de la sortie (13) de sorte que la sortie ait un diamètre correspondant audit diamètre du faisceau laser (6).

2. Procédé selon la revendication 1, comprenant en outre la formation d'un tourbillon au moyen d'une lame sensiblement hélicoïdale (16) qui s'étend radialement vers l'intérieur depuis la surface intérieure (112) et s'étend sur au moins 120 degrés autour de l'axe central (Z) et le long de la surface tournée vers l'intérieur.

3. Procédé selon une quelconque des revendications précédentes, dans lequel la surface intérieure (112) possède une section transversale qui diminue le long de l'axe central (Z) en direction de la sortie (13).

4. Procédé selon une quelconque des revendications précédentes, dans lequel la surface intérieure (112) possède une section transversale qui est constante le long de l'axe central (Z).

5. Procédé selon une quelconque des revendications précédentes, dans lequel le canal (14) possède une deuxième partie (142) qui possède une surface conique intérieure et est située en aval de ladite première partie, dans lequel un angle de cône de ladite deuxième surface conique intérieure est supérieur à un angle de cône de ladite première partie.

6. Procédé selon une quelconque des revendications précédentes, dans lequel l'entrée (12), la sortie (13), le canal (14) et la lame (16) sont en un seul tenant avec la buse (1).

7. Procédé selon une quelconque des revendications précédentes, comprenant en outre une paroi interne qui divise une partie du canal dans laquelle la lame est active d'une partie du canal dans laquelle le faisceau laser circule.
